# EUROPEAN PATENT SPECIFICATION

(11) **EP 1 147 869 B1**
(45) Date of publication and mention of the grant of the patent: **18.08.2004**
(21) Application number: 01870083.1
(22) Date of filing: 19.04.2001
(51) Int. Cl.: B29C 44/56

(54) **Method for forming a polyurethane foam part, and foam part as obtained by said method**
Verfahren zur Herstellung eines Polyurethanschaumteiles, und durch dieses Verfahren herstellbares Schaumteil
Procédé de formage d'une pièce en mousse de polyuréthane, et pièce en mousse telle qu'obtenue par ledit procédé

(30) Priority: 20.04.2000 FR 0005076
(43) Date of publication of application: 24.10.2001
(73) Proprietor: RECTICEL, 1200 Brussels (BE)
(72) Inventor: Moreau, Daniel Henri Albert, 95570 Bouffemont (FR)
(74) Representative: Van Reet, Joseph

(56) References cited:
- EP-A- 0 240 342
- EP-A- 0 633 114
- GB-A- 1 185 006
- DATABASE WPI Section Ch, Week 198028 Derwent Publications Ltd., London, GB; Class A25, AN 1980-48851C XP002170869 & JP 55 070899 A (NHK SPRING CO LTD), 28 May 1980 (1980-05-28)

## Description

The present invention relates to a method for forming a polyurethane foam part having a predetermined shape, wherein a preform is placed in a heated mould and subjected in this mould to heat and compression to deform the preform to said predetermined shape.

Such a method is known e.g. from EP-A-0 633 114. The obtained polyurethane foam parts are used for example as water or air seal, for acoustic improvements such as insulation or absorption, for elastic functions or filtration, etc. Such parts have to show a geometrical shape which is perfectly adapted to the housing wherein they are to be positioned. They are used in a still increasing number of applications which require more and more complex shapes.

In practice, these parts are obtained either by cutting a polyurethane foam block or plate, or by moulding, i.e. by foaming the raw material destined to obtain the foam in a mould cavity. These methods are lengthy and expensive to be applied, the foaming method having further the drawback of requiring very perfected moulding devices. Moreover, some foam types are not suited for being moulded and, in general, higher foam densities are obtained by a moulding process, for example foam densities of about 100 kg/m³ or more. In case so-called undercuts are to be provided in the mould to produce complex shapes, problems arise to enable the moulded part to be demoulded.

Another method for producing such parts is disclosed in EP-A-0 633 114. In this known method, use is made of a preform which is heated and compressed in a two-part thermoforming mould or in a mould comprising slides, the preform preferably having a tubular shape. In other known methods the edges of a foam preform inserted in a mould are completely compressed between the opposite edges of the mould parts and the obtained parts are cut out in these completely compressed areas. Accordingly, when carrying out the method disclosed in EP-A-0 633 114, the skilled person could make use of a tubular preform which is somewhat too long, so that the extremities project out of the mould and are cut of after the forming process. A drawback thereof is that a cutting step is required to finish the lateral sides of the part. A further drawback is that it is not possible to produce for example a polyurethane foam part having straight lateral sides. Indeed, due to the considerable compression of the foam at the edges of the mould, a curved lateral side will always be obtained, in particular in case of a relatively thick foam layer. In this latter case the foam structure may even become damaged at the edges due to the large difference in degree of compression.

An object of the present invention is therefore to provide a method for forming a polyurethane foam part which enables to give also to the lateral sides a complex geometrical shape and which does not require a cutting step to finish the part.

To this end, the present invention provides a method as defined in claim 1.

In the method according to the invention, the preform is positioned entirely within the mould cavity so that no portions thereof have to be cut away to finish the part. Moreover, since the peripheral edge of the preform abuts the side walls of the female mould part or compression chamber, it is moulded or formed against these side walls into the desired shape, without being influenced by any complete compression of the preform at the edges of the mould. Notwithstanding the presence of an undercut in the mould, the finished part can furthermore be removed out of the mould without risk on damaging the part.

In a preferred embodiment of the method according to the invention use is made of a mould, the side walls of the female part of which show a height which is equal to or larger than the thickness of the portion of the preform abutting the respective side wall. In this way, the preform can easily be positioned into the female mould part and the mould can be closed without problems by inserting the male mould part into the female part. In case the preform has not a uniform thickness, the central portions thereof which do not abut the side walls of the female mould part may be thicker than the height to these side walls since this will not hamper the closing of the mould.

In an advantageous embodiment of the method according to the invention the preform has a substantially uniform thickness which is equal to or larger than the maximum thickness of the polyurethane part to be formed. In this embodiment, the preform can be cut easily out of a polyurethane foam plate.

The present invention also relates to a polyurethane foam part as obtained by the method according to the invention.

Other particularities and advantages of the invention will become apparent from the following description of some particular embodiments of the method and the polyurethane foam part according to the present invention. The reference numerals used in this description relate to the annexed drawings wherein:
Figure 1 shows a top plan view of a polyurethane foam part according to the invention;
Figure 2 is a view according to arrow II in Figure 1;
Figures 3 to 5 are cross-sectional view according to lines III-III, IV-IV and V-V in Figure 1;
Figure 6 is a cross-sectional view of the mould used to form the part illustrated in the previous figures at the beginning of the forming step;
Figure 7 is a cross-sectional view of the mould during the forming step; and
Figures 8a, 8b and 8c are respectively a top plan view, a cross-sectional view according to line B-B in Figure 8a and a side view according to arrow C in Figure 8a of the preform positioned in the mould illustrated in Figures 6 and 7 to produce the polyurethane foam part.

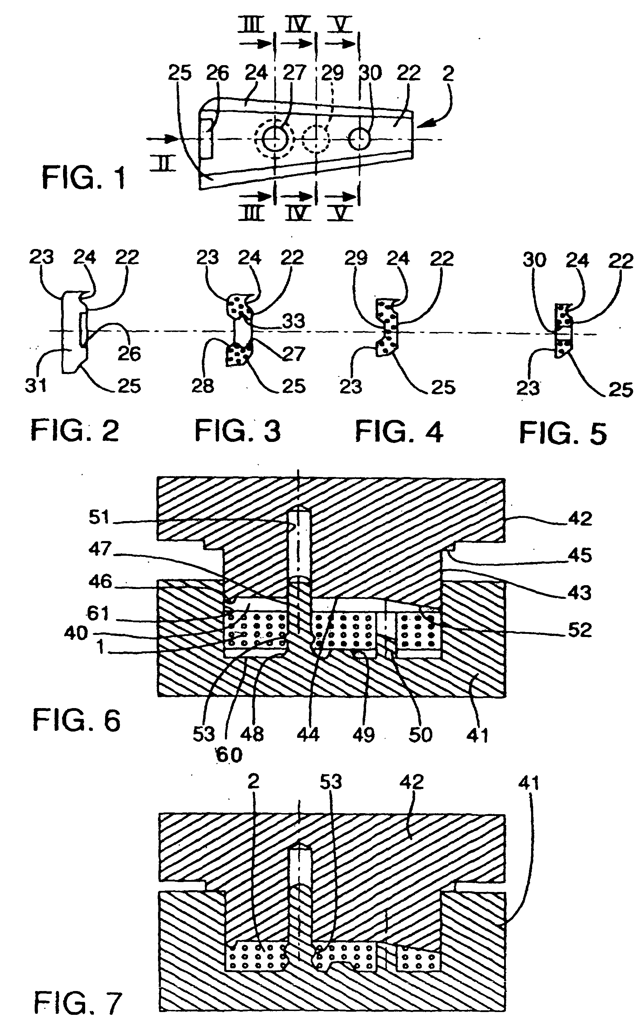

Figures 1 to 5 show the finished polyurethane foam part 2 which is to be obtained. In the embodiment illustrated in the drawings the part 2 shows two large generally trapezoidal faces 22 and 23 mutually connected by the lateral sides. At one of its large sides the upper large face is delimited laterally by a groove 24 showing a rounded section whilst the other large side of the upper large face 22 shows a cant 25. The upper large face 22 of the part 2 shows further a notch 26 extending into one of the lateral sides 31 of the part 2. Two through holes 27 and 30 extend entirely through the part 2, at right angles to the large faces 22 and 23. A circumferential groove 33 is formed in the wall of the through hole 27 and ends into this hole. The part 2 further comprises a dish 29 formed in the lower large face 23.

As can be seen in Figures 2 to 5, the thickness of the part decreases towards the small side of the large faces 22 and 23.

According to the invention, this part 2 is obtained starting from a preform which is compressed in a heated mould in order to deform it in accordance to the shape of the mould cavity.

Referring to Figures 6 and 7, the mould comprises two mutually movable mould parts. The lower mould part 41 is a female mould part comprising a bottom 60 and side walls 61 defining a compression chamber 40. The upper mould part 42 is a male mould part showing an embossment 43. The two mould parts 41 and 42 ore movable with respect to one another in such a manner that the male mould part 42, more particularly the embossment 43 thereof, can be inserted into and withdrawn from the compression chamber 40. Abutment means 45 limit the insertion of the embossment 43 into the cavity 40.

When the upper 42 and lower mould parts 41 abut against one another through the intermediary of the abutment means 45, the compression chamber 40 is partly filled by means of the embossment 43 and the remaining space defines a closed mould cavity, the shape of which is identical to the shape of the part 2 to be obtained. In a way which is known per se, the cross-sections of the male and female mould parts, more particularly of the embossment 43 and the compression chamber 40, in a direction perpendicular to the relative displacement direction of the mould parts are such that the embossment slides with only a small clearance within the compression chamber. In other words, the male mould part 42 slides along the side walls 61 of the female mould part 41.

As can be seen in Figures 6 and 7, the bottom 60 of the compression chamber 40 carries two columns 47 and 50 and a boss 49. The column 47 shows a circumferential flange 53 and its base a splaying 48. Due to the presence of the flange 53 a so-called undercut is formed in the mould, namely in the area below this flange, which poses in the conventional moulding processes, using a foamable reaction mixture, problems to enable to demould the part without damaging it.

The front side 44 of the embossment 43 facing the compression chamber 40 shows a rib 46 and an inclined portion 52.

In the illustrated embodiment, the column 47 has such a height that it slides within a boring 51 in the male mould part 42 when the two mould parts approach each other. Column 50 has such a shape and height that it engages the inclined portion 52 of the front side 44 of the embossment 43 when the mould is closed. In a variant embodiment, this column 50 could also slide in a boring provided thereto in the male mould part 42.

The relative displacement of the two mould parts is carried out in a direction substantially parallel to the thorough holes in the finished part if this part comprises such holes as in the illustrated embodiment or in a direction perpendicular to the large faces of this finished part.

The preform 1 destined to be used for forming the finished part 2 is made of a material showing the same chemical characteristics as the material destined to compose this finish part 2 but having a lower overall or average density than the finished part. It comprises polyurethane foam, in particular flexible polyurethane foam, either or not as a complex with other materials. The materials used to compose such a complex may be of very different natures. However, they have to be able to withstand the deformation to which the preform will be subjected during the forming process and the temperature at which the compression will be carried out. Examples of such materials are a polyurethane foil or a non-woven material. It is also possible to use a preform comprising at least two polyurethane foams showing different properties. Compared to a moulding process wherein a foaming reaction mixture is applied in a mould, the use of a preform in accordance to the present invention offers the advantage of enabling to use much more different polyurethane foam types and in particular foams of a lower density than those usually obtained in moulding processes.

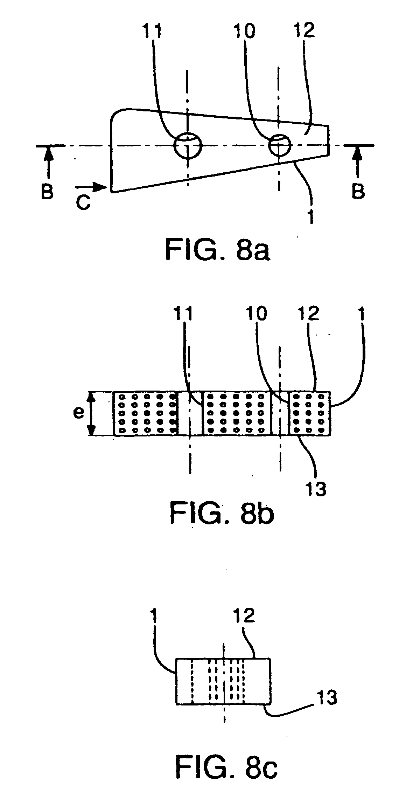

Figures 8a to 8c show an embodiment of the preform 1 used to form the finished part 2 illustrated in Figures 1 to 5.

This preform 1 has substantially the same general outline as the part to be obtained. However, since the preform 1 is deformable and will be positioned with its peripheral edge in abutment to the side walls 60 of the female mould part 41, the outline of the preform may also be somewhat larger than the outline of the finished part or in other words than the inner outline of the compression chamber 40. In contrast to the prior art forming processes, the portions of the preform which extend beyond the outline of the part to be obtained still do not have to be cut of in the method according to the invention since they will be deformed in the mould to the required shape, i.e. these portions will also be moulded in accordance to the shape of the final part. When the preform has an outline corresponding substantially to the outline of the finished part, the preform can however be inserted more easily into the female mould part.

In the embodiment illustrated in the figures, the upper and lower faces of the preform have substantially the same trapezoidal shape as the large faces 22 and 23 of the finished part 2. This preform is obtained in an economical way by cutting the preform out of a polyurethane foam block which is preferably a plate or a cylinder showing a cross-section corresponding to the shape of the large faces 22, 23 of the finished part 2. In this way, the preform has a substantially uniform thickness e which is equal to or larger than the maximum thickness of the part 2 to be formed.

In most area's of the finished part, the thickness e of the preform 1 is larger than the thickness of the finished part but in some area's both thicknesses may be substantially the same. In this latter case, a minimum amount of foam material was used to produce the part.

It is however also possible to determine the thickness of the preform in view of the degree of compression to be applied to the polyurethane foam to achieve the desired density of the finished part. This degree of compression comprises preferably at least 10%.

The area's of the finished part 2 showing a thickness equal to the thickness of the preform 1 are destined to form the portions of the finished part with the smallest density.

When the finished part 2 shows through holes extending at right angles to its large faces as in the described example, corresponding holes 10, 11 are provided in the preform 1.

To form the part 2 after having cut out the appropriate preform:
- a mould is provided, such as the mould illustrated in Figure 6, the mould cavity of which has a shape corresponding to the shape of the part 2 to be obtained and the side walls 60 of which have a height which is at least equal to the height or thickness of the portion of the preform which will abut the respective side wall,
- the mould is heated,
- the preform 1 is positioned in the compression chamber 40 of the mould with its openings 11, 10 arranged around the columns 47 and 50,
- the two mould parts 41 and 42 are moved relatively towards one another until they engage each other through the intermediary of the abutment means 45,
- the mould is kept close for a period of time required to form the part,
- the mould is opened to demould the part 2,
- the part 2 is allowed to cool down.

The flexibility of the polyurethane foam enables to insert this foam into the compression chamber 40, even in the presence of the flange 53 on the column 47. At the location of this flange, or in general in case of other undercuts in the mould, the foam is compressed so that it is shaped in accordance to the shape of the mould cavity. The flexibility of the polyurethane foam also enables to remove the finished part out of the mould, despite the presence of undercuts such as for example the groove 33 formed around the flange 53 which can usually not be demoulded without a risk on damaging the part.

The forming process of a polyurethane foam can usually be carried out at a temperature of between 150 and 200°C. The mould temperature is selected in such a manner that the polyurethane foam can be given a new shape but will not be deteriorated.

The forming process is based on the capacity to polyurethane to transform itself, without being deteriorated, at certain temperatures into a mouldable material having properties similar to those of a thermoplastic material and to recover its initial properties when being cooled down. In contrast to the usually employed thermoplastic materials, such as polyethylene, polyurethane foam will not undergo a new transformation when being heated again later on which allows to obtain a finished part with stable dimensions independent of the environment wherein it will be applied.

Thanks to the forming process of the present invention, it is possible to form all the sides of the part in one step, even the lateral sides, since the material flows in the entire mould cavity when it is heated to a suitable temperature. One could thus say that the polyurethane foam is subjected to a thermomoulding process. In this thermomoulding process, the polyurethane foam inserted in the mould cavity can, due to its resiliency, fill up this mould cavity entirely even when it is compressed only in one direction. It is therefore not necessary to use slides although this is not excluded. For example in case the side walls of the compression chamber would not be parallel to one another, the male mould part could be composed of different portions or slides in order to enable it to be inserted into the compression chamber.

The time during which the mould is kept closed is determined in function of the used material and is proportional to the selected degree of compression. Usually, the mould will be kept closed for 2 to 10 minutes.

In the embodiment illustrated in the drawings, the preform 1 has the same trapezoidal outline as the part 2 to be obtained. As explained hereabove, the preform may show a larger outline than the final part. Moreover, excrescences can be provided onto the circumference of the preform in order to enable it to fill a particular area of the mould. This would for example be useful in case the column 47 would show a groove instead of a flange. Another application of an excressence is to obtain a region in the finished part showing a larger density. In this case, the excressence will generally be positioned onto one of the large faces of the preform so that the thickness thereof will be larger in the region where the density of the final part has to be higher. In the case of excrescences onto the circumference of the preform, the flexibility of the polyurethane foam is used to insert a preform in the mould cavity which has a cross-section larger than the cross-section of the mould cavity.

Instead of excrescences it is also possible to provide concave area's in the preform to reduce the amount of material if recesses have to be formed in the final part or if low density regions have to be obtained.

When defining that the preform 1 has an outline corresponding substantially to the outline of the part 2 to be obtained, this embraces the presence of such excrescences.

In order to avoid burrs or flashes on the periphery of the "moulded" part, the male mould part 42, in particular the embossment 43 thereof, and the compression chamber 40 are dimensioned in such a manner that at the temperature at which the forming process is carried out, they slide into one another with a minimum clearance.

The method for forming a polyurethane foam part according to the present invention enables to obtain in an economical way very complex shapes which are at present difficult to achieve. It enables moreover to obtain clean parts, i.e. parts without burrs or flashes, without requiring an additional finishing operation. As explained hereabove, the method enables especially to achieve directly nicely finished lateral sides which are formed against the side walls of the mould cavity and which do not require any subsequent cutting step.

The parts obtained by the method according to the invention have further a nice appearance since they do not show a seam like the usual moulded parts. They have not the risk of showing badly risen portions or irregular bubbles since they are obtained starting from a perfectly homogeneous material.

## Claims

1. A method for forming a polyurethane foam part (2) having a predetermined shape, wherein a preform (1) is placed in a heated mould and subjected in this mould to heat and compression to deform the preform (1) to said predetermined shape, **characterised in that** use is made of a mould which comprises a female mould part (41), showing a bottom (60) and side walls (61) defining a compression chamber (40) and forming at least one undercut in the mould, and a male mould part (42) insertable into the female mould part (41) to define together with the female mould part a mould cavity having a shape corresponding to the predetermined shape of the part (2) to be formed, said preform (1), which shows a peripheral edge, is positioned in the female mould part (41) with its peripheral edge in abutment to the side walls (61) of this female mould part, the mould is closed by inserting the male mould part (42) into the female mould part (41) thereby deforming the preform (1) positioned therein, the deformed preform is maintained for a predetermined period in the closed mould heated to a predetermined temperature such as to achieve a remaining deformation, the mould is opened and the formed part (2) is allowed to cool down.

2. A method according to claim 1, **characterised in that** use is made of a mould, the side walls (61) of the female part (41) of which show a height which is equal to or larger than the thickness (e) of the portion of the preform (1) abutting the respective side wall (61).

3. A method according to claim 1 or 2, **characterised in that** when inserting the male mould part (42) into the female mould part (41), the male mould part slides along the side walls (61) of the female mould part.

4. A method according to any one of the claims 1 to 3, **characterised in that** use is made of a mould, the male mould part (42) of which consists of one piece.

5. A method according to any one of the claims 1 to 4, **characterised in that** said preform (1) has a substantially uniform thickness (e) which is equal to or larger than the maximum thickness of the polyurethane part to be formed.

6. A method according to claim 5, **characterised in that** said preform (1) is cut out of a polyurethane plate.

7. A method according to any one of the claims 1 to 6, **characterised in that** said preform (1) has an outline corresponding substantially to the outline of the polyurethane part (2) to be formed.

8. A method according to any one of the claims 1 to 7, **characterised in that** said preform (1) is provided with at least one through hole (27, 30) and the bottom (60) of the female mould part (41) with a projection (50, 53) which is inserted in said through hole (27, 30) when positioning the preform (1) into the female mould part (41).

9. A method according to any one of the claims 1 to 8, **characterised in that** the mould is heated to a temperature of between 150 and 200 °C.

10. A method according to any one of the claims 1 to 9, **characterised in that** the compressed preform is maintained for 2 to 10 minutes in the closed mould.

11. A polyurethane foam part as obtained by the method according to any one of the claims 1 to 10.

## Patentansprüche

1. Verfahren zur Herstellung eines Polyurethanschaumteils (2) mit einer vorbestimmten Form, wobei ein Vorformling (1) in ein beheiztes Formstück eingelegt wird und in diesem Formstück Hitze und Kompression ausgesetzt ist, um den Vorformling (1) in die erwähnte vorbestimmte Form zu verformen, **dadurch gekennzeichnet, dass** ein Formstück verwendet wird, das einen weiblichen Formteil (41) mit einem Boden (60) und Seitenwänden (61) umfasst, welche eine Kompressionskammer (40) bilden und zumindest einen Unterschnitt im Formstück bilden, sowie einen männlichen Formteil (42), der in den weiblichen Formteil (41) einlegbar ist, um gemeinsam mit dem weiblichen Formteil einen Formenhohlraum zu bilden, dessen Form der vorbestimmten Form des herzustellenden Teils (2) entspricht, wobei der erwähnte Vorformling (1), der einen umgebenden Rand aufweist, in den weiblichen Formteil (41) eingelegt wird, wobei der umgebende Rand an den Seitenwänden (61) dieses weiblichen Formteils anliegt, wonach das Formstück durch Einführen des männlichen Formteils (42) in den weiblichen Formteil (41) geschlossen wird, wodurch der darin befindliche Vorformling (1) verformt wird und der verformte Vorformling eine vorbestimmte Zeit lang im geschlossenen Formstück bleibt, der auf eine vorbestimmte Temperatur erwärmt wird, sodass eine bleibende Verformung erhalten wird, wonach das Formstück geöffnet wird und der geformte Teil (2) auskühlen kann.

2. Verfahren nach Anspruch 1, **dadurch gekennzeichnet, dass** ein Formstück verwendet wird, wobei die Seitenwände (61) des weiblichen Formteils (41) eine Höhe aufweisen, die gleich oder größer ist als die Stärke (e) des Teils des Vorformlings (1), der an der jeweiligen Seitenwand (61) anliegt.

3. Verfahren nach Anspruch 1 oder 2, **dadurch gekennzeichnet, dass** der männliche Formteil bei der Einführung des männlichen Formteils (42) in den weiblichen Formteil (41) an den Seitenwänden (61) des weiblichen Formteils entlang gleitet.

4. Verfahren nach einem der Ansprüche 1 bis 3, **dadurch gekennzeichnet, dass** ein Formstück verwendet wird, dessen männlicher Formteil (42) aus einem Stück besteht.

5. Verfahren nach einem der Ansprüche 1 bis 4, **dadurch gekennzeichnet, dass** der erwähnte Vorformling (1) eine substanziell einförmige Stärke (e) aufweist, die gleich oder größer als die maximale Stärke des Polyurethanschaumteils ist, der geformt werden soll.

6. Verfahren nach Anspruch 5, **dadurch gekennzeichnet, dass** der erwähnte Vorformling (1) aus einer Polyurethanplatte ausgeschnitten ist.

7. Verfahren nach einem der Ansprüche 1 bis 6, **dadurch gekennzeichnet, dass** der erwähnte Vorformling (1) einen Umriss hat, der substanziell dem Umriss des Polyurethanschaumteils (2) entspricht, der geformt werden soll.

8. Verfahren nach einem der Ansprüche 1 bis 7, **dadurch gekennzeichnet, dass** der erwähnte Vorformling (1) mindestens ein Durchgangsloch (27, 30) aufweist und der Boden (60) des weiblichen Formteils (41) einen Fortsatz (50, 53) aufweist, der in das erwähnte Durchgangsloch (27, 30) eingeführt wird, wenn der Vorformling (1) in den weiblichen Formteil (41) eingelegt wird.

9. Verfahren nach einem der Ansprüche 1 bis 8, **dadurch gekennzeichnet, dass** die Form auf eine Temperatur zwischen 150 und 200°C erwärmt wird.

10. Verfahren nach einem der Ansprüche 1 bis 9, **dadurch gekennzeichnet, dass** der komprimierte Vorformling 2 bis 10 Minuten lang in der geschlossenen Form bleibt.

11. Ein Polyurethanschaumteil, wie es nach dem Verfahren nach einem der Ansprüche 1 bis 10 erhalten wurde.

## Revendications

1. Procédé de formage d'une pièce (2) en mousse de polyuréthanne, présentant une forme prédéterminée, dans lequel une préforme (1) est placée dans un moule chauffé et soumise dans ce moule à de la chaleur et à une compression pour déformer la préforme (1) en ladite forme prédéterminée, **caractérisé en ce qu'**on fait usage d'un moule qui comprend une partie de moule femelle (41), présentant un fond (60) et des parois latérales (61) qui délimitent une chambre de compression (40) et formant au moins une contre-dépouille dans le moule, et une partie de moule mâle (42) insérable dans la partie du moule femelle (41) pour délimiter conjointement à la partie de moule femelle une cavité de moule présentant une forme correspondante à la forme prédéterminée de la pièce (2) à former, **en ce que** ladite préforme (1), qui montre un bord périphérique, est positionnée dans la partie de moule femelle (41) avec son bord périphérique en appui sur les parois latérales (61) de cette partie de moule femelle; **en ce que** le moule est fermé par insertion de la partie de moule mâle (42) dans la partie de moule femelle (41) en déformant la préforme (1) positionnée à l'intérieur, **en ce que** la préforme déformée est maintenue pendant une période prédéterminée dans le moule fermé, chauffé à une température prédéterminée de façon à atteindre une déformation permanente, **en ce que** le moule est ouvert et **en ce qu'**on laisse refroidir la pièce formée (2).

2. Procédé suivant la revendication 1, **caractérisé en ce qu'**on fait usage d'un moule dont les parois latérales (61) de la partie femelle (41) présentent une hauteur qui est égale ou plus grande que l'épaisseur (e) de la partie de la préforme (1) qui est en appui sur la paroi latérale respective (61).

3. Procédé suivant l'une des revendications 1 et 2, **caractérisé en ce que**, lorsqu'on insère la partie de moule mâle (42) dans la partie de moule femelle (41), la partie de moule mâle coulisse le long des parois latérales (61) de la partie de moule femelle.

4. Procédé suivant l'une quelconque des revendications 1 à 3, **caractérisé en ce qu'**on fait usage d'un moule dont la partie de moule mâle (42) est constituée d'une seule pièce.

5. Procédé suivant l'une quelconque des revendications 1 à 4, **caractérisé en ce que** ladite préforme (1) a une épaisseur (e) sensiblement uniforme qui est égale à ou plus grande que l'épaisseur maximale de la pièce en polyuréthanne à former.

6. Procédé suivant la revendication 5, **caractérisé en ce que** ladite préforme (1) est découpée à partir d'une plaque de polyuréthanne.

7. Procédé suivant l'une quelconque des revendications 1 à 6, **caractérisé en ce que** ladite préforme (1) présente un contour correspondant sensiblement au contour de la pièce en polyuréthanne (2) à former.

8. Procédé suivant l'une quelconque des revendications 1 à 7, **caractérisé en ce que** ladite préforme (1) est pourvue d'au moins un trou traversant (27, 30) et **en ce que** le fond (60) de la partie de moule femelle (41) est pourvue d'une saillie (50, 53) qui est insérée dans le trou traversant (27, 30) lorsqu'on positionne la préforme (1) dans la partie de moule femelle (41 ).

9. Procédé suivant l'une quelconque des revendications 1 à 8, **caractérisé en ce que** le moule est chauffé à une température comprise entre 150 et 200 °C.

10. Procédé suivant l'une quelconque des revendications 1 à 9, **caractérisé en ce que** la préforme comprimée est maintenue pendant 2 à 10 minutes dans le moule fermé.

11. Pièce en mousse de polyuréthanne, telle qu'obtenue par le procédé suivant l'une quelconque des revendications 1 à 10.
